# FASCICULE DE BREVET EUROPEEN

(11) **EP 4 494 903 B1**
(45) Date de publication et mention de la délivrance du brevet: **25.03.2026**
(21) Numéro de dépôt: 24189422.9
(22) Date de dépôt: 18.07.2024
(51) Int. Cl.: B60G 21/05

(54) **STRUCTURE D'ESSIEU TORSIBLE**
VERBUNDLENKER ACHSSTRUKTUR
TWIST BEAM AXLE STRUCTURE

(30) Priorité: 20.07.2023 FR 2307798
(43) Date de publication de la demande: 22.01.2025
(73) Titulaire: Renault s.a.s, 92100 Boulogne Billancourt (FR)
(72) Inventeur: BLANCHE, Pierre, 72000 LE MANS (FR); DELAURE, Nicolas, 72000 LE MANS (FR); GALLO, Emmanuel, 72000 LE MANS (FR); POURCEAU, Jean-Michel, 72000 LE MANS (FR)

(56) Documents cités:
- JP-A- 2012 111 440
- JP-A- 2016 101 849
- KR-B1- 101 338 966
- KR-B1- 102 267 135

## Description

La présente invention se rapporte à une structure d'essieu torsible de véhicule automobile.

Des essieux arrière connus de véhicule automobile comprennent une paire de bras de suspension permettant de relier des supports de roue arrière à la caisse du véhicule. Les deux bras de suspension sont montés à pivotement sur la caisse et ils s'étendent vers l'arrière du véhicule. Et ces deux bras de suspension en regard sont reliés entre eux par une traverse.

Ce type d'essieu est couramment mis en oeuvre à l'arrière des véhicules de tourisme. Les traverses d'essieu sont alors soumises à la fois à des sollicitations élevées en roulage et à des déformations de grande amplitude pour maîtriser les oscillations en dévers ainsi que des mouvements de carrossage et de braquage induits par ce dévers. Les traverses sont usuellement à profil ouvert, et notamment profilées en U. Elles présentent alors un fond et deux ailes libres dressées en regard l'une de l'autre. Aussi, elles présentent deux extrémités opposées et chacune des deux extrémités présente un bord de fond et deux bords d'aile. Et des échancrures sont ménagées dans les bords d'aile pour former une paire d'échancrures.

Ainsi, chacune des extrémités de la traverse reçoit un bras qui vient alors s'étendre dans la paire d'échancrures où il est soudé.

Au surplus, à chaque extrémité de traverse, une pièce de liaison longitudinale, ou gousset, est installée à l'intérieur de la traverse de façon que les deux bords longitudinaux opposés de la pièce de liaison soient respectivement reliés aux ailes de la traverse, tandis que l'une des deux extrémités de pièce de liaison est reliée au bras correspondant.

Les traverses et les pièces de liaison longitudinales sont réalisées à partir de flans emboutis et soudés. Ces flans sont découpés dans des bandes de matériaux métalliques d'une épaisseur constante. Les épaisseurs sont alors choisies de manière à satisfaire aux critères de tenue en fatigue et de choc à la roue dans les zones de l'essieu les plus sollicitées. Conséquemment, dans les zones les moins sollicitées, et notamment dans les zones plus éloignées de la jonction entre la traverse et les bras, la tenue en fatigue s'établit bien au-delà des seuils requis. Partant, le surplus de matière est inutile et coûteux.

Le document JP 2016 101849 A divulgue une structure d'essieu torsible de véhicule automobile selon le préambule de la revendication 1. Les documents JP 2012 111440 A, KR 102 267 135 B1, KR 101 338 966 81 divulguent d'autres structures d'essieu torsible de véhicule automobile.

Aussi, un problème qui se pose et que vise à résoudre la présente invention est de fournir un essieu torsible plus économique.

Dans le but de résoudre ce problème, il est proposé une structure d'essieu torsible de véhicule automobile comprenant : une traverse profilée en U présentant, d'une part un fond et deux ailes libres et d'autre part, deux extrémités de traverse opposées et une partie médiane, chacune desdites deux extrémités présentant un bord de fond et deux bords d'aile, lesdits bords d'aile présentant chacun une échancrure en arc pour former une paire d'échancrures ; un bras creux relié à chacune desdites deux extrémités opposées et s'étendant dans ladite paire d'échancrures ; et, une pièce de liaison longitudinale présentant deux extrémités de pièce opposées et deux bords longitudinaux opposés, et montée à chacune desdites deux extrémités de traverse de façon que lesdits deux bords longitudinaux opposés soient respectivement reliés auxdites ailes à l'intérieur de ladite traverse, tandis que l'une desdites deux extrémités de pièce est reliée audit bras correspondant.

Ladite pièce de liaison présente alors une épaisseur décroissante de ladite une desdites deux extrémités de pièce reliée audit bras jusqu'à l'autre extrémité de pièce. Ainsi, une caractéristique de l'invention réside dans la mise en œuvre d'une pièce de liaison longitudinale, dénommée gousset, présentant une épaisseur décroissante depuis son extrémité liée au bras jusqu'à son extrémité opposée, laquelle s'étend dans la traverse. De la sorte, la pièce de liaison présente l'épaisseur requise dans la zone de jonction avec le bras pour pouvoir satisfaire les critères de tenue en fatigue ou de choc à la roue où ils sont plus exigeants, tandis qu'elle est plus mince vers son extrémité opposée où elle est moins sollicitée.

En conséquence, la pièce de liaison comporte moins de matière et elle est donc moins coûteuse. Et au surplus, l'essieu est plus léger ce qui permet d'alléger également le véhicule qui consomme alors moins de carburant.

Ainsi, la tenue en fatigue des différentes parties de l'essieu est localement adaptée aux seuils de tenue en fatigue requis.

En outre, ladite traverse est préférentiellement obtenue par emboutissage d'une bande métallique présentant une épaisseur décroissante depuis deux extrémités de bande correspondant auxdites deux extrémités de traverse vers une zone médiane correspondant à ladite partie médiane.

Ainsi, en surplus du gousset, la traverse elle-même présente une épaisseur de tôle métallique croissante entre sa zone médiane et ses deux extrémités. De la sorte, la traverse est plus résistante dans sa tenue à la fatigue dans les zones de jonction avec les bras de suspension où elle est plus sollicitée, et elle est moins résistante dans sa zone médiane où elle est moins sollicitée. Par là-même, on vient réduire la quantité de matière nécessaire à la réalisation de la traverse et par conséquent, on abaisse ses coûts. Et de surcroît, on abaisse également le poids du véhicule automobile sur lequel elle est installée.

Selon un mode de mise en œuvre de l'invention, particulièrement avantageux, ladite pièce de liaison présente une première portion incluant ladite autre extrémité de pièce et une deuxième portion incluant ladite une desdites deux extrémités de pièce, et ladite première portion présente une première épaisseur e1, tandis que ladite deuxième portion présente une deuxième épaisseur e2 supérieure à ladite première épaisseur e1. Selon ce mode de mise en œuvre, la pièce de liaison présente deux portions de longueurs sensiblement égales, d'une épaisseur plus importante dans la portion incluant l'extrémité de la pièce reliée au bras.

Préférentiellement, ladite pièce de liaison présente une portion intermédiaire entre ladite première portion et ladite deuxième portion, et ladite portion intermédiaire présente une épaisseur intermédiaire ei comprise entre e1 et e2. De la sorte, la pièce de liaison présente trois portions successives d'épaisseurs différentes. Une telle pièce peut par exemple être obtenue en partant d'un flan laminé différemment suivant la longueur de la pièce. Autrement dit, le flan est moins laminé pour obtenir une certaine épaisseur dans la portion incluant ladite une desdites deux extrémités de pièce apte à être reliée au bras. Elle est moins laminée dans la portion incluant l'extrémité opposée. Et elle est laminée de façon intermédiaire dans la portion intermédiaire.

Elle peut également être obtenue en associant l'une sur l'autre une pluralité de plaques métalliques. Par exemple, on fournit un premier flan d'une faible épaisseur et s'étendant sur une longueur équivalente à la longueur maximale de la pièce de liaison. On fournit un deuxième flan d'une même faible épaisseur présentant une longueur intermédiaire et que l'on soude sur le premier flan jusqu'à l'une de ses extrémités. Et on fournit un troisième flan d'une même faible épaisseur, plus court encore, et que l'on vient souder sur le deuxième au niveau de l'extrémité du premier.

Selon une autre variante de réalisation, on relie bout-à-bout successivement trois flans de différentes épaisseurs. Ainsi, on fournit un premier flan d'une faible épaisseur et dont la longueur correspond à la seule longueur de faible épaisseur de la pièce de liaison. On fournit un deuxième flan d'une épaisseur supérieure et présentant une longueur correspondant à la seule longueur de la partie intermédiaire de la pièce. Le deuxième flan est alors soudé au bout du premier flan dans son prolongement. Et on fournit un troisième flan d'une épaisseur encore supérieure et présentant une longueur correspondant à la longueur de la dernière partie de pièce. Le troisième flan est alors soudé au bout du deuxième flan, à l'opposé du premier flan.

Selon un mode de réalisation de l'invention, particulièrement avantageux, ledit bord de fond et ladite une desdites deux extrémités de pièce s'étendent à l'opposé l'un de l'autre par rapport audit bras. De la sorte, le bras vient en prise entre l'extrémité de la pièce de liaison et le fond du profilé en U au niveau du bord de fond. Et il est en appui dans la paire d'échancrures en arc. Aussi, le bras et la traverse sont soudés ensemble à la jointure des échancrures, d'une part, et d'autre part la pièce de liaison est soudée à son extrémité sur le bras, tandis qu'à l'opposé le bord de fond et le bras sont reliés ensemble par au moins un cordon de soudure.

Aussi, ladite autre extrémité de pièce est liée audit fond. Autrement dit, l'autre extrémité de la pièce, opposée à celle qui est reliée au bras, est liée au fond par soudure. Ainsi, la pièce de liaison est montée de manière inclinée à l'intérieur de la traverse. Elle vient ainsi refermer le profilé en U à son extrémité. En conséquence, la rigidité de l'extrémité de traverse est accrue.

En outre, préférentiellement, ladite pièce de liaison présente deux bordures opposées recourbées l'une vers l'autre et formant lesdits deux bords longitudinaux opposés. Avantageusement, les deux bordures sont recourbées parallèlement l'une à l'autre de manière à pouvoir venir s'appliquer à plat respectivement contre les deux ailes de la traverse. Ainsi, deux cordons de soudure sont ménagés respectivement aux jointures des bordures et des ailes en contact de manière à obtenir une parfaite rigidité de l'ensemble.

Préférentiellement, ladite pièce de liaison présente une pliure suivant une ligne perpendiculaire auxdits bords longitudinaux opposés et à distance de ladite une desdites deux extrémités de pièce. Ainsi, la pièce de liaison présente une partie incluant ladite une desdites deux extrémités de pièce, qui est reliée au bras, et qui est sensiblement pliée par rapport au reste de ladite pièce de liaison. Autrement dit, ladite partie est pliée, par exemple d'un angle inférieur à 20° par rapport au reste de la pièce selon une ligne coupant ladite pièce et s'étendant perpendiculairement aux bords longitudinaux. Ainsi, et comme on l'expliquera plus en détail dans la suite de la description, ladite partie pliée vient s'étendre sensiblement parallèlement audit fond, et écarté dudit fond. De la sorte, l'extrémité de la traverse en U et la partie pliée forme sensiblement un cylindre à base carrée. Cela permet de rigidifier plus encore l'extrémité de la traverse.

Aussi, lesdites deux bordures recourbées s'étendent à l'extérieur de ladite pliure. De la sorte, on comprend que, les bordures recourbées s'étendent à l'extérieur du volume formé par la pièce de liaison et la traverse tandis que la partie pliée est sensiblement parallèle au fond de la traverse. De la sorte, il est plus aisé de venir souder les bords de la pièce de liaison sur les deux ailes en regard de la traverse.

Selon une autre caractéristique de l'invention, particulièrement avantageuse, ladite une desdites deux extrémités de pièce s'étend en T perpendiculairement auxdites ailes. De la sorte, l'interface de liaison avec le bras présente une surface plus importante et permet par là même de former une plus grande longueur de cordon de soudure autour de l'extrémité. De la sorte, on obtient une liaison plus ferme de ladite extrémité sur le bras.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique partielle de dessus d'un essieu torsible conforme à l'invention ;
[Fig. 2] est une vue est une vue schématique partielle de dessous d'un essieu torsible conforme à l'invention ;
[Fig. 3] est une vue schématique de face d'un élément de l'objet de la [Fig. 2] ;
[Fig. 4] est une vue schématique en perspective selon la flèche IV de l'objet de la [Fig. 3] ;
[Fig. 5] est une vue schématique en perspective de côté d'un autre élément de l'objet de la [Fig. 2] ;
[Fig. 6] est une vue schématique en perspective selon la flèche VI de l'objet de la [Fig. 5] ; et,
[Fig. 7] est une vue schématique en coupe de l'objet de la [Fig. 6] selon le plan VII-VII.

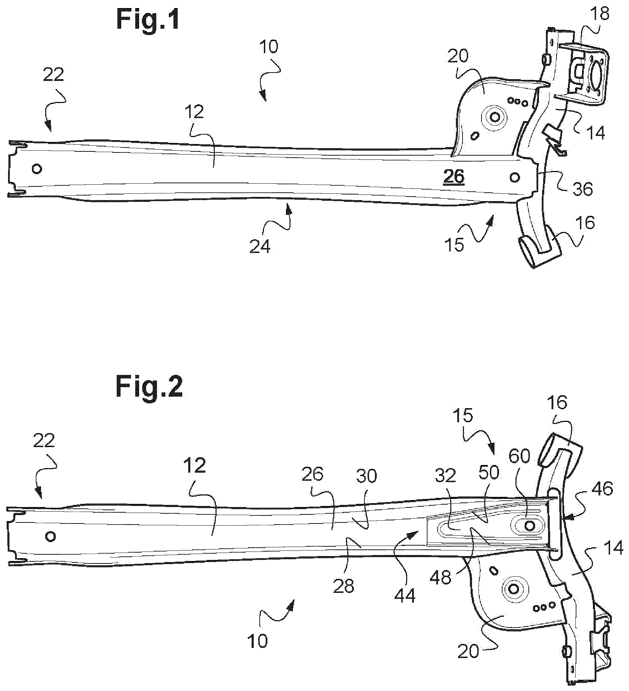

La [Fig. 1] montre partiellement une structure d'essieu torsible 10 présentant une traverse 12. La traverse 12 présente une extrémité gauche 15 reliée en T à un bras de suspension gauche 14. Le bras de suspension 14 présente une extrémité avant équipée d'une douille 16 pour pouvoir être montée à rotation sur un châssis de véhicule automobile. A l'opposé, le bras de suspension 14 présente une extrémité arrière munie d'un support de roue 18. Et une coupelle de ressort gauche 20 est montée solidaire de la traverse 12 et du bras 14, dans l'angle formé par l'extrémité gauche 15 de la traverse 12 et l'extrémité arrière du bras de suspension 14.

La traverse 12 présente à l'opposé, une extrémité droite 22, symétrique de l'extrémité gauche 15 par rapport à une partie médiane 24. Ainsi, l'extrémité droite 22 de la traverse 12 est équipée de manière symétrique d'un bras droit et d'une coupelle de ressort droite.

On retrouve sur la [Fig. 2], la structure d'essieu torsible 10 telle qu'illustrée sur la [Fig. 1], vue de dessous. On y retrouve la traverse 12, le bras de suspension gauche 14 et la coupelle de ressort gauche 20.

Aussi, la traverse 12 présente une section profilée en U. Elle comprend ainsi, un fond 26 et deux ailes 28, 30 dressées en regard l'une de l'autre par rapport au fond 26.

En outre, une pièce de liaison 32, dénommée également gousset, est engagée à l'intérieur de la traverse 12 dans l'extrémité gauche 15 et elle s'étend jusqu'au bras gauche 14.

Bien évidemment, une même pièce de liaison, non représentée, est engagée à l'intérieur de la traverse dans son extrémité droite de manière symétrique pour s'étendre jusqu'au bras droit.

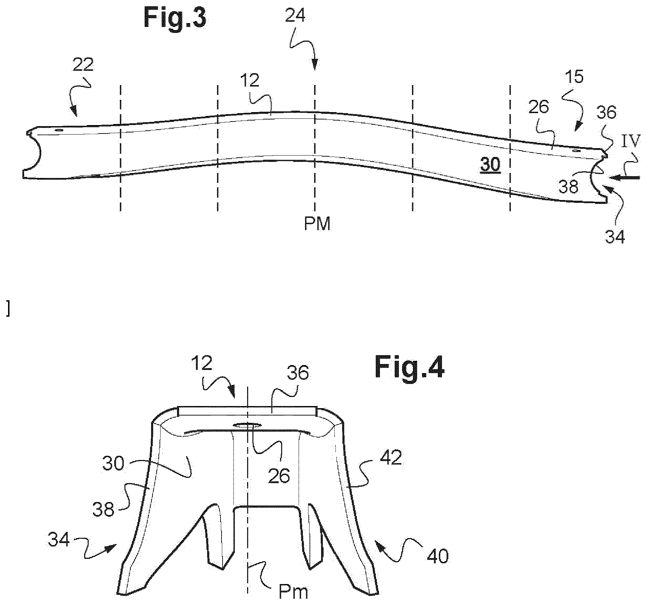

On se rapportera aux [Fig. 3] et [Fig. 4] pour décrire en détail l'extrémité gauche 15 de traverse 12.

On retrouve sur la [Fig. 3] l'extrémité gauche 15. Apparaissent, l'une des ailes 30 terminée par un premier bord d'aile 34, et le fond 26. Ainsi, le fond 26 présente un bord de fond 36. Une première échancrure en arc 38 est ménagée dans le bord d'aile 34. La première échancrure en arc 38 présente un rayon de courbure prédéterminée correspondant sensiblement au rayon de courbure de la demi-périphérie du bras 14 comme on l'expliquera ci-après.

On retrouve sur la [Fig. 4] l'extrémité gauche 15 de la traverse 12, et notamment les des deux ailes en regard 30, 28 ainsi que le fond 26.

Par ailleurs, on retrouve également le bord de fond 36 et la première échancrure en arc 38 ménagée dans le premier bord d'aile 34. Aussi, sur cette [Fig. 4] apparaît un second bord d'aile 40 de l'autre aile 28 dans lequel est ménagée une seconde échancrure en arc 42, symétrique de la première échancrure en arc 38 par rapport à un plan moyen Pm coupant longitudinalement le fond 26 et s'étendant entre les deux ailes 28, 30.

En outre, l'extrémité droite 22 de la traverse 12 représentée sur la [Fig. 3] est symétrique de l'extrémité gauche 15 par rapport au plan médian PM coupant la traverse 12 dans la partie médiane 24.

Par ailleurs, la traverse est obtenue par emboutissage d'un flan métallique en acier par exemple. Et l'épaisseur de ce flan métallique, est croissante de la partie médiane 24 vers les deux extrémités opposées 15, 22. Le flan métallique destiné à emboutir la traverse 12 est par exemple divisé en six sixièmes de longueurs sensiblement égales. Ainsi, les deux premiers sixièmes proximaux correspondant à la partie médiane 24 de la traverse 12, présentent une épaisseur de 3 mm par exemple. Les deux seconds sixièmes du flan métallique, symétriques l'un de l'autre par rapport aux deux premiers sixièmes proximaux, présentent une épaisseur de 4 mm. Et les deux troisièmes sixièmes distaux correspondant respectivement aux deux extrémités opposées 15, 22, présentent une épaisseur de 5 mm. Les valeurs d'épaisseurs sont données à titre indicatif, mais nullement limitatif.

De tels amincissements localisés des flans peuvent être réalisés par étirement ou bien par écrasement, par exemple par laminage.

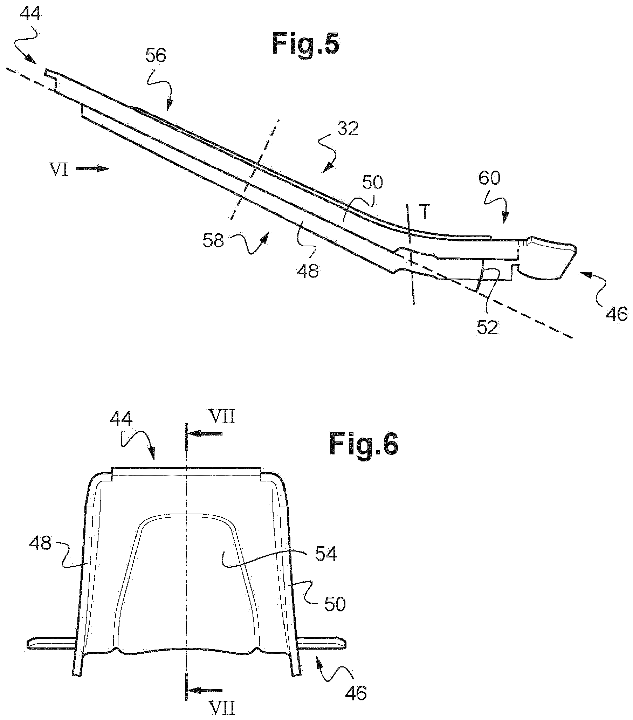

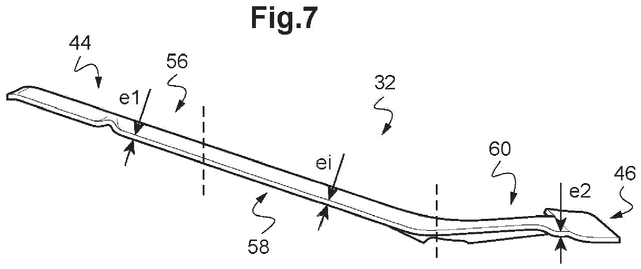

On se référera à présent aux [Fig. 5], [Fig. 6] et [Fig. 7] pour décrire en détail la pièce de liaison 32.

Ainsi on retrouve sur la [Fig. 5], la pièce de liaison 32 vue de côté. Elle s'étend longitudinalement d'une première extrémité 44 jusqu'à une seconde extrémité 46. Elle présente deux bordures longitudinales opposées 48, 50 dressées en regard l'une de l'autre. Les deux bordures longitudinales dressées 48, 50 définissent deux bords opposés écartés l'un de l'autre d'une distance correspondant à la distance qui sépare les deux ailes 28, 30 de la traverse 12 au niveau des deux extrémités opposées 15, 22.

Aussi, la pièce de liaison 32 présente une pliure suivant une ligne transversale T sensiblement perpendiculaire aux deux bordures longitudinales 48, 50, et située sensiblement aux deux tiers 56, 58, de la pièce à partir de la première extrémité 44. Ainsi, un dernier tiers 60 de la pièce incluant la seconde extrémité 46 est incliné par rapport aux deux premiers tiers 56, 58 s'étendant dans un même plan, d'un angle 52 sensiblement inférieur à 20°, par exemple 15°.

En outre, la seconde extrémité 46 de la pièce de liaison 32 s'étend en T sensiblement perpendiculairement aux bordures longitudinales 48, 50. Autrement dit, la seconde extrémité 46 présente une largeur supérieure à la largeur qui s'étend entre les deux bordures 48, 50 de la pièce de liaison 32.

On retrouve sur la [Fig. 6], la pièce de liaison 32 vue de sa première extrémité 44 et on retrouve sa seconde extrémité 46 qui vient s'étendre transversalement de chaque côté des deux bordures 48, 50.

Aussi, on observera que la pièce de liaison 32 présente une zone centrale emboutie en relief 54 permettant de la rigidifier.

On se reportera à présent sur la [Fig. 7] montrant en coupe longitudinale selon le plan de coupe VII-VII représenté sur la [Fig. 6], la pièce liaison 32.

La pièce de liaison 32 est réalisée par l'emboutissage d'un flan métallique présentant différentes épaisseurs. Ainsi, dans l'exemple présenté sur la [Fig. 7], la pièce de liaison 32 qui en résulte présente trois épaisseurs différentes dans les trois portions de pièce correspondant respectivement aux trois tiers 56, 58 et 60 de la pièce de liaison 32. Ainsi, la première portion de pièce correspondant au premier tiers 56, présente une épaisseur e1, par exemple de 3 mm. La troisième portion de pièce correspondant au dernier tiers 60 présente une épaisseur e2, par exemple de 5 mm. Et, la deuxième portion de pièce correspondant au deuxième tiers 58, présente une épaisseur intermédiaire ei, par exemple de 4 mm.

Autrement dit, l'épaisseur de la pièce de liaison 32 augmente, ici selon trois paliers, de sa première extrémité 44 vers sa seconde extrémité 46. Une progression selon deux paliers ou selon plus de trois paliers peut être mise en œuvre.

En outre, une progression continue peut également être mise en œuvre.

Aussi, les valeurs d'épaisseurs sont données à titre indicatif et nullement limitatif.

On se reportera de nouveau sur la [Fig. 2] afin de décrire plus précisément, la mise en œuvre de la pièce de liaison 32 à l'extrémité gauche 15 de la traverse 12.

Ainsi, la seconde extrémité 46 en T de la pièce de liaison 32 s'étend en appui sur le bras de suspension gauche, tandis que sa première extrémité 44 s'étend en appui contre le fond 26 de la traverse 12.

Aussi, la troisième portion de pièce correspondant au dernier tiers 60 de la pièce de liaison 32 s'étend sensiblement parallèlement au fond 26 de la traverse 12 le long des bords libres des deux ailes opposées 28, 30, tandis que les deux premières portions correspondant aux première et deuxième portions sont inclinées pour converger vers le fond 26.

Aussi, à l'opposé, comme illustré sur la [Fig. 1], le fond 26 vient, au niveau du bord de fond 36, s'appliquer sur le bras de suspension 14 à l'opposé de la seconde extrémité 46 de la pièce de liaison 32.

Par ailleurs, on observera sur la [Fig. 2] que les deux bordures longitudinales dressées 48, 50 de la pièce de liaison 32 viennent respectivement en appui contre les deux ailes 28, 30.

Ainsi, dans cette position relative de la traverse 12, du bras de suspension 14 et de la pièce de liaison 32, l'ensemble est soudé, notamment, aux jointures entre les deux bordures longitudinales dressées 48, 50 et les deux ailes 28, 30, entre la première extrémité 44 et le fond 26, entre la seconde extrémité 46 et le bras de suspension 14, et à l'opposé, le long du bord de fond 36, entre le fond 26 et le bras de suspension 14. En outre, la coupelle de ressort gauche 20 est également soudée au bras de suspension 14 et à l'extrémité gauche 15 de la traverse.

Ainsi, l'ensemble est parfaitement rigide et la pièce de liaison 32 vient renforcer l'extrémité gauche 15 de la traverse 12 à laquelle le bras de suspension 14 est solidarisé.

Ainsi, la pièce de liaison 32 est plus épaisse dans sa troisième portion de pièce correspondant au dernier tiers 60, dans la zone de liaison entre l'extrémité gauche 15 de la traverse 12 et le bras gauche suspension 14, où elle est le plus sollicitée mécaniquement. En revanche, à l'autre extrémité 44 de la pièce de liaison 32, où elle est moins sollicitée, l'épaisseur est moins importante.

De la sorte, on réduit sensiblement les coûts matières de la pièce de liaison 32, et au surplus on concourt à l'allégement de l'essieu.

La traverse 12 décrite ci-dessus vise à obtenir le même objectif. Néanmoins, une traverse dont l'épaisseur de la tôle emboutie et constante peut également être mise en œuvre avec une pièce de liaison 32 telle que décrite ci-dessus.

## Revendications

1. Structure d'essieu torsible (10) de véhicule automobile comprenant :
- une traverse profilée en U (12) présentant, d'une part un fond (26) et deux ailes libres (28, 30) et d'autre part, deux extrémités de traverse opposées (15, 22) et une partie médiane (24), chacune desdites deux extrémités présentant un bord de fond (36) et deux bords d'aile (34, 40), lesdits bords d'aile présentant chacun une échancrure en arc (38, 42) pour former une paire d'échancrures ;
- un bras creux (14) relié à chacune desdites deux extrémités opposées (15, 22) et s'étendant dans ladite paire d'échancrures (38, 42) ;
- une pièce de liaison longitudinale (32) présentant deux extrémités de pièce opposées (44, 46) et deux bords longitudinaux opposés (48, 50), et montée à chacune desdites deux extrémités de traverse (15, 22) de façon que lesdits deux bords longitudinaux opposés (48, 50) soient respectivement reliés auxdites ailes (28, 30) à l'intérieur de ladite traverse (12), tandis que l'une (46) desdites deux extrémités de pièce est reliée audit bras correspondant (14) ;
**caractérisée en ce que** ladite pièce de liaison (32) présente une épaisseur décroissante de ladite une (46) desdites deux extrémités de pièce reliée audit bras (14) jusqu'à l'autre (44) extrémité de pièce.

2. Structure d'essieu torsible selon la revendication 1, **caractérisée en ce que** ladite traverse (12) est obtenue par emboutissage d'une bande métallique présentant une épaisseur décroissante depuis deux extrémités de bande correspondant auxdites deux extrémités de traverse (22, 15) vers une zone médiane correspondant à ladite partie médiane.

3. Structure d'essieu torsible selon la revendication 1 ou 2, **caractérisée en ce que** ladite pièce de liaison (32) présente une première portion incluant ladite autre extrémité de pièce (22) et une deuxième portion incluant ladite une desdites deux extrémités de pièce (15), et **en ce que** ladite première portion présente une première épaisseur e1, tandis que ladite deuxième portion présente une deuxième épaisseur e2 supérieure à ladite première épaisseur e1.

4. Structure d'essieu torsible selon la revendication 3, **caractérisée en ce que** ladite pièce de liaison (32) présente une portion intermédiaire entre ladite première portion et ladite deuxième portion, et **en ce que** ladite portion intermédiaire présente une épaisseur intermédiaire ei comprise entre e1 et e2.

5. Structure d'essieu torsible selon l'une quelconque des revendications 1 à 4, **caractérisée en ce que** ledit bord de fond (36) et ladite une desdites deux extrémités de pièce (46) s'étendent à l'opposé l'un de l'autre par rapport audit bras (14).

6. Structure d'essieu torsible selon l'une quelconque des revendications 1 à 5, **caractérisée en ce que** ladite autre (44) extrémité de pièce est liée audit fond (26).

7. Structure d'essieu torsible selon l'une quelconque des revendications 1 à 6, **caractérisée en ce que** ladite pièce de liaison (32) présente deux bordures opposées (48, 50) recourbées l'une vers l'autre et formant lesdits deux bords longitudinaux opposés.

8. Structure d'essieu torsible selon l'une quelconque des revendications 1 à 7, **caractérisée en ce que** ladite pièce de liaison présente une pliure suivant une ligne T perpendiculaire auxdits bords longitudinaux opposés (48, 50) et à distance de ladite une (46) desdites deux extrémités de pièce.

9. Structure d'essieu torsible selon les revendications 7 et 8, **caractérisée en ce que** lesdites deux bordures recourbées (48, 50) s'étendent à l'extérieur de ladite pliure.

10. Structure d'essieu torsible selon l'une quelconque des revendications 7 ou 9, **caractérisée en ce que** ladite une (46) desdites deux extrémités de pièce s'étend en T perpendiculairement auxdites bordures (48, 50).

## Patentansprüche

1. Drehelastische Achsstruktur (10) für ein Kraftfahrzeug, umfassend:
- eine Traverse mit U-Profil (12), die einerseits einen Boden (26) und zwei freie Schenkel (28, 30) und andererseits zwei gegenüberliegende Traversenenden (15, 22) und ein mittleres Teilstück (24) aufweist, wobei jedes der zwei Enden einen Bodenrand (36) und zwei Schenkelränder (34, 40) aufweist, wobei die Schenkelränder jeweils einen bogenförmigen Ausschnitt (38, 42) aufweisen, um ein Paar von Ausschnitten zu bilden;
- einen hohlen Arm (14), der mit jedem der zwei gegenüberliegenden Enden (15, 22) verbunden ist und sich in dem Paar von Ausschnitten (38, 42) erstreckt;
- ein längsgerichtetes Verbindungsteil (32), das zwei gegenüberliegende Teilenden (44, 46) und zwei gegenüberliegende Längsränder (48, 50) aufweist und an jedem der zwei Traversenenden (15, 22) so angebracht ist, dass die zwei gegenüberliegenden Längsränder (48, 50) jeweils mit einem der Schenkel (28, 30) im Inneren der Traverse (12) verbunden sind, während das eine (46) der zwei Teilenden mit dem entsprechenden Arm (14) verbunden ist;
**dadurch gekennzeichnet, dass** das Verbindungsteil (32) eine Dicke aufweist, die von dem einen (46) der zwei Teilenden, das mit dem Arm (14) verbunden ist, bis zum anderen (44) Teilende abnimmt.

2. Drehelastische Achsstruktur nach Anspruch 1, **dadurch gekennzeichnet, dass** die Traverse (12) durch Tiefziehen eines Metallbandes erhalten wird, das eine Dicke aufweist, die von zwei Bandenden, die den zwei Traversenenden (22, 15) entsprechen, in Richtung eines dem mittleren Teilstück entsprechenden mittleren Bereichs abnimmt.

3. Drehelastische Achsstruktur nach Anspruch 1 oder 2, **dadurch gekennzeichnet, dass** das Verbindungsteil (32) einen ersten Abschnitt, der das andere Teilende (22) enthält, und einen zweiten Abschnitt, der das eine der zwei Teilenden (15) enthält, aufweist, und dadurch, dass der erste Abschnitt eine erste Dicke e1 aufweist, während der zweite Abschnitteine zweite Dicke e2 aufweist, die größer als die erste Dicke e1 ist.

4. Drehelastische Achsstruktur nach Anspruch 3, **dadurch gekennzeichnet, dass** das Verbindungsteil (32) einen Zwischenabschnitt zwischen dem ersten Abschnitt und dem zweiten Abschnitt aufweist, und dadurch, dass der Zwischenabschnitt eine Zwischendicke ei aufweist, die zwischen e1 und e2 liegt.

5. Drehelastische Achsstruktur nach einem der Ansprüche 1 bis 4, **dadurch gekennzeichnet, dass** der Bodenrand (36) und das eine der zwei Teilenden (46) sich, bezogen auf den Arm (14), einander gegenüberliegend erstrecken.

6. Drehelastische Achsstruktur nach einem der Ansprüche 1 bis 5, **dadurch gekennzeichnet, dass** das andere (44) Teilende mit dem Boden (26) verbunden ist.

7. Drehelastische Achsstruktur nach einem der Ansprüche 1 bis 6, **dadurch gekennzeichnet, dass** das Verbindungsteil (32) zwei gegenüberliegende Umrandungen (48, 50) aufweist, die zueinander hin gekrümmt sind und die zwei gegenüberliegenden Längsränder bilden.

8. Drehelastische Achsstruktur nach einem der Ansprüche 1 bis 7, **dadurch gekennzeichnet, dass** das Verbindungsteil eine Biegung entlang einer Linie T aufweist, die zu den gegenüberliegenden Längsrändern (48, 50) senkrecht ist und in einem Abstand von dem einen (46) der zwei Teilenden verläuft.

9. Drehelastische Achsstruktur nach den Ansprüchen 7 und 8, **dadurch gekennzeichnet, dass** sich die zwei gekrümmten Umrandungen (48, 50) außerhalb der Biegung erstrecken.

10. Drehelastische Achsstruktur nach einem der Ansprüche 7 oder 9, **dadurch gekennzeichnet, dass** sich das eine (46) der zwei Teilenden T-förmig senkrecht zu den Umrandungen (48, 50) erstreckt.

## Claims

1. Motor vehicle torsion axle structure (10), comprising:
- a U-shaped cross-member (12) having, on the one hand, a bottom (26) and two free flanges (28, 30) and, on the other hand, two opposite cross-member ends (15, 22) and a middle part (24), each of said two ends having a bottom edge (36) and two flange edges (34, 40), said flange edges each having an arc-shaped notch (38, 42) so as to form a pair of notches;
- a hollow arm (14) connected to each of said two opposite ends (15, 22) and extending in said pair of notches (38, 42);
- a longitudinal connecting piece (32) having two opposite piece ends (44, 46) and two opposite longitudinal edges (48, 50), and being mounted at each of said two cross-member ends (15, 22) in such a way that said two opposite longitudinal edges (48, 50) are respectively connected to said flanges (28, 30) inside said cross-member (12), while one (46) of said two piece ends is connected to said corresponding arm (14);
**characterized in that** said connecting piece (32) has a thickness that decreases from said one (46) of said two piece ends that is connected to said arm (14) to the other piece end (44).

2. Torsion axle structure according to Claim 1, **characterized in that** said cross-member (12) is obtained by stamping a metal strip having a thickness that decreases from two strip ends corresponding to said two cross-member ends (22, 15) towards a middle zone corresponding to said middle part.

3. Torsion axle structure according to Claim 1 or 2, **characterized in that** said connecting piece (32) has a first portion including said other piece end (22) and a second portion including said one of said two piece ends (15), and **in that** said first portion has a first thickness e1, while said second portion has a second thickness e2 that is greater than said first thickness e1.

4. Torsion axle structure according to Claim 3, **characterized in that** said connecting piece (32) has an intermediate portion between said first portion and said second portion, and **in that** said intermediate portion has an intermediate thickness ei that is between e1 and e2.

5. Torsion axle structure according to any one of Claims 1 to 4, **characterized in that** said bottom edge (36) and said one of said two piece ends (46) extend opposite one another with respect to said arm (14).

6. Torsion axle structure according to any one of Claims 1 to 5, **characterized in that** said other piece end (44) is connected to said bottom (26).

7. Torsion axle structure according to any one of Claims 1 to 6, **characterized in that** said connecting piece (32) has two opposite edges (48, 50) curved towards one another and forming said two opposite longitudinal edges.

8. Torsion axle structure according to any one of Claims 1 to 7, **characterized in that** said connecting piece has a bend along a line T perpendicular to said opposite longitudinal edges (48, 50) and at a distance from said one (46) of said two piece ends.

9. Torsion axle structure according to Claims 7 and 8, **characterized in that** said two curved edges (48, 50) extend on the outside of said bend.

10. Torsion axle structure according to either one of Claims 7 and 9, **characterized in that** said said one (46) of said two piece ends extends in a T-shape perpendicularly to said edges (48, 50).
